# EUROPÄISCHE PATENTSCHRIFT

(11) **EP 3 046 726 B1**
(45) Veröffentlichungstag und Bekanntmachung des Hinweises auf die Patenterteilung: **22.05.2019**
(21) Anmeldenummer: 14814686.3
(22) Anmeldetag: 26.08.2014
(51) Int. Cl.: B23Q 11/08, F16J 15/40

(54) **ABSCHALTVERZÖGERUNG FÜR SPERRLUFTSTROM**
DELAYING STOPPING OF THE SUPPLY OF A PURGE AIR STREAM
DISPOSITIF DE RETARDEMENT DE COUPURE POUR UN FLUX D'AIR DE BLOCAGE

(30) Priorität: 13.09.2013 DE 102013015203
(43) Veröffentlichungstag der Anmeldung: 27.07.2016
(73) Patentinhaber: EMAG Holding GmbH, 73084 Salach (DE)
(72) Erfinder: HEIMBACH, Konrad, 73054 Eislingen (DE); MÜLLER, Toni, 73054 Eislingen (DE)
(86) Internationale Anmeldenummer: PCT/DE2014/000439
(87) Internationale Veröffentlichungsnummer: WO 2015/035968

(56) Entgegenhaltungen:
- DE-A1- 4 015 241
- DE-A1-102007 007 343
- JP-A- 2008 119 808

## Beschreibung

Die Erfindung betrifft eine Maschine mit einer Abschaltverzögerung für einen Sperrluftstrom, der gegen das Eindringen von Kühlflüssigkeit und/oder Schmutzpartikeln in ein zu schützendes Maschinenaggregat geführt wird. Empfindliche Maschinenaggregate werden häufig mit sogenannter Sperrluft beaufschlagt, um zu verhindern, dass Schmutzpartikel, Flüssigkeiten oder heiße Gase in diese eindringen und Schäden verursachen. Beispielsweise werden die Motorspindeln von Werkzeugmaschinen aus einer separaten Druckluftanlage mit Sperrluft gegen das Eindringen von Kühlflüssigkeit geschützt, um zu verhindern dass deren Lagerung beschädigt wird. Aus der DE 40 15 241 A1 ist eine Werkzeugmaschinenspindel mit luftgekühlter Wälzlagerung bekannt. Dabei wird die Kühlluftquelle zusätzlich als Sperrluftquelle genutzt. Für den Austritt von Kühl- und Sperrluft sind an einem Wälzlager zwei Ringspalte vorgesehen, welche das Vermischen beider Luftströme verhindern. Mit dem Abschalten der Werkzeugmaschine wird diese stromlos. Dann können Verunreinigungen in die Spindel eindringen, wenn diese auf Umgebungstemperatur abkühlt und dabei Luft aus ihrer Umgebung einsaugt. Die DE 10 2007 007 343 A1 betrifft einen Staubschutzmechanismus für eine Spindelvorrichtung, der die beim Schneiden verwendete Flüssigkeit mit Druckluft daran hindert, in den Innenbereich der Spindelvorrichtung einzudringen. Wenn die Spindeldrehzahl einen vorbestimmten Wert einnimmt oder diesen unterschreitet, wird die zugeführte Druckluft reduziert. Gleichzeitig wird ein nicht näher definierter Zeitgeber auf eine Zeitspanne eingestellt. Nach Ablauf der Zeitspanne wird die Druckluftzufuhr unterbrochen.

Es ist die Aufgabe der vorliegenden Erfindung nach dem Ausschalten einer Maschine zu verhindern, dass Verunreinigungen in ein zu schützendes Maschinenaggregat eindringen. Gelöst wird diese Aufgabe mit einer Maschine nach Patentanspruch 1. Vorteilhafte Ausführungen ergeben sich aus den Unteransprüchen. Gemäß einem vorteilhaften Aspekt der Erfindung wird der Sperrluftstrom nach dem Abschalten der Maschine noch weiter aufrecht erhalten. Dazu ist ein Nachlauftimer vorgesehen, der nach Ablauf eines vorbestimmbaren Zeitintervalls ein entsprechendes Ventil schließt. Im Stand der Technik sind elektrische Verzögerungsschaltungen für vielfältige Schaltungsanwendungen bekannt. Diese sind auf die jeweiligen Einsatzverhältnisse zugeschnitten. Allen Verzögerungsschaltungen ist gemeinsam, dass ein zugeführtes Eingangssignal nach Ablauf einer gewünschten Zeitspanne am Ausgang zur Verfügung gestellt wird. Im Gegensatz zu diesen bekannten Verzögerungsschaltungen muss der Nachlauftimer für die Sperrluftstromabschaltung jedoch ohne permanente Stromversorgung auskommen, weil die Maschine nach dem Ausschalten stromlos geworden ist. Im Folgenden wird die Erfindung an Hand eines Ausführungsbeispiels näher beschrieben. Es zeigen:
- Fig. 1: zeigt ein Fluid-Schema zum Schalten der Sperrluft
- Fig. 2: zeigt einen Nachlauftimer in schematischer Darstellung

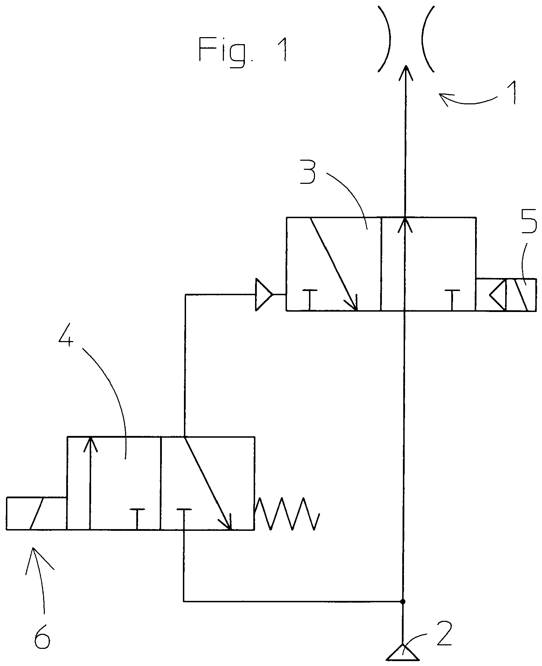

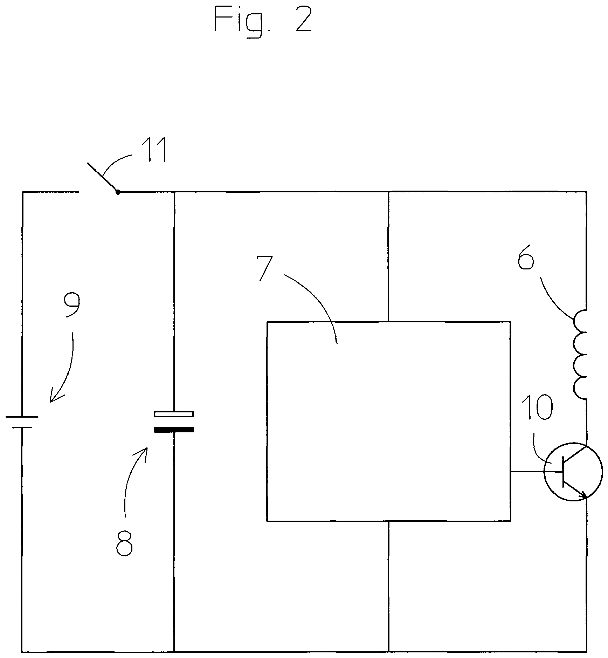

In Fig. 1 ist ein vereinfachtes Fluid-Schema bei eingeschaltetem Sperrluftstrom dargestellt. Die Maschinensteuerung (nicht dargestellt) öffnet über eine erste Magnetspule 5 das Pneumatikventil 3 und schaltet die Sperrluft 1 ein, so dass diese von der betrieblichen Druckluftanlage 2 zur Motorspindel strömt. Das bistabile Pneumatikventil 3 behält auch nach Wegfall der Versorgungsspannung seinen Schaltzustand bei, so dass der Sperrluftstrom 1 nach dem Ausschalten der Maschine weiterhin zur Motorspindel strömt. Besonders vorteilhaft wird das Pneumatikventil 3 nicht elektrisch über eine weitere Magnetspule sondern über ein Vorsteuerventil 4 ausgeschaltet. Dieses ist als Miniaturventil ausgeführt und wird über eine zweite Magnetspule 6 aktiviert. Zum Einstellen der gewünschten Verzögerung ist ein Nachlauftimer 7 vorgesehen, der nach Ablauf einer gewünschten Zeitspanne einen Schaltimpuls zur Verfügung stellt. Da zur Aktivierung der Magnetspule 6 nur eine geringe Energiemenge benötigt wird, kann der Nachlauftimer 7 besonders kostengünstig ausgeführt werden. Die Anordnung des Nachlauftimers 7 wird an Hand von Fig. 2 näher erläutert. Der Ein- Ausschalter der Maschine ist symbolisch durch einen Hauptschalter 11 dargestellt. Bei geschlossenem Hauptschalter 11 wird ein Kondensator 8 von einer Stromversorgung 9 aufgeladen. Der Kondensator 8 ist so dimensioniert, dass er den Nachlauftimer 7 mindestens für die Dauer der Nachlaufzeit, beispielsweise 30 Minuten, mit Strom versorgt. Vorteilhaft wird das Vorsteuerventil 4 über einen separaten Transistor 10 geschaltet. Auf diese Weise wird sichergestellt, dass beim Abschaltvorgang ausreichend Energie zur Verfügung steht.

### Bezugszeichenliste

- 1: Sperrluft
- 2: Druckluftanlage
- 3: Pneumatikventil
- 4: Vorsteuerventil
- 5: Erste Magnetspule
- 6: Zweite Magnetspule
- 7: Nachlauftimer
- 8: Kondensator
- 9: Stromversorgung
- 10: Transistor
- 11: Hauptschalter

## Patentansprüche

1. Maschine mit einem Maschinenaggregat, mit einer Abschaltverzögerung für einen Sperrluftstrom (1) gegen das Eindringen von Kühlflüssigkeit und/oder Schmutzpartikeln in das zu schützende Maschinenaggregat und mit einem bistabilen Pneumatikventil (3), wobei der Sperrluftstrom (1) bei eingeschalteter Maschine von einer betrieblichen Druckluftanlage (2) über das Pneumatikventil (3) zum Maschinenaggregat strömt, wobei der Sperrluftstrom (1) nach dem Ausschalten der Maschine nach Ablauf einer gewünschten Zeitspanne selbsttätig abschaltbar ist, wobei die Zeitspanne über einen elektrischen Nachlauftimer (7) einstellbar ist und der Sperrluftstrom (1) bei stromloser Maschine abschaltbar ist,
**dadurch gekennzeichnet,**
**dass** das Pneumatikventil (3) über eine erste Magnetspule (5) in die Offenstellung und über ein Vorsteuerventil (4) in die Geschlossenstellung bewegbar ist.

2. Maschine nach Patentanspruch 1, **dadurch gekennzeichnet, dass** das Vorsteuerventil als Miniaturventil ausgeführt und über eine zweite Magnetspule (6) aktivierbar ist.

3. Maschine nach Patentanspruch 1 oder 2, **dadurch gekennzeichnet, dass** als Energiespeicher für den Nachlauftimer (7) mindestens ein Kondensator (8) vorgesehen ist.

4. Maschine nach einem der Patentansprüche 1 bis 3, **dadurch gekennzeichnet, dass** die zweite Magnetspule (6) am Vorsteuerventil (4) über einen separaten Transistor (10) schaltbar ist.

## Claims

1. Machine with a machine unit, with a switch-off delay for a purging air flow (1) against the ingress of cooling fluid and / or dirt particles in a machine unit to be protected and with a bistable pneumatic valve (3), wherein the blocking air flow (1) flows from an operating compressed air system (2) via a pneumatic valve (3) to the machine unit if the machine is switched on, wherein the blocking air flow (1) after switching off the machine after a desired period of time is automatically switchable off, wherein the period of time is adjustable via an electric follow-up timer (7) and that the blocking air flow (1) is switchable off when the machine is without electricity, **characterized, in that** the pneumatic valve (3) can be moved into the open position via a first magnet coil (5) and can be moved into the closed position via a pilot valve (4).

2. Machine according to Patent Claim 1, **characterized in that** the pilot valve is designed as a miniature valve and can be activated via a second magnetic coil (6).

3. Machine according to Patent Claim 1 or 2, **characterized in that** at least one capacitor (8) is provided as an energy store for the after-run timer (7).

4. Machine according to one of the Patent Claims 1 to 3, **characterized in that** the second magnetic coil (6) on the pilot valve (4) is switchable via a separate transistor (10).

## Revendications

1. Machine avec une unité machine, avec une temporisation d'arrêt pour un flux d'air de purge (1) contre l'entrée de fluide de refroidissement et / ou de saletés dans une machine à protéger et avec une vanne pneumatique bistable (3), dans laquelle le flux d'air de purge (1) avec la machine Le système d'air comprimé (2) via une vanne pneumatique (3) s'écoule dans l'unité de la machine, le flux d'air bloquant (1) s'éteignant automatiquement après l'arrêt de la machine après une période de temps déterminée, la (1) peut être éteint lorsque la machine n'est pas en marche,
**caractérisé**
**en ce que** la vanne pneumatique (3) peut être amenée en position ouverte via une première bobine magnétique (5) et en position fermée par une vanne pilote (4).

2. Machine selon la revendication 1, **caractérisée en ce que** la vanne pilote est conçue comme une vanne miniature et peut être activée via une seconde bobine magnétique (6).

3. Machine selon la revendication 1 ou 2, **caractérisée en ce qu'**au moins un condensateur (8) est prévu en tant que réserve d'énergie pour le temporisateur de post-exécution (7).

4. Machine selon l'une des revendications 1 à 3, **caractérisée en ce que** la deuxième bobine magnétique (6) sur la vanne pilote (4) via un transistor séparé (10) est commutable.
